(19) Europäisches Patentamt / European Patent Office / Office européen des brevets

(11) **EP 2 680 218 A1**

(12) **EUROPEAN PATENT APPLICATION**
published in accordance with Art. 153(4) EPC

(43) Date of publication:
**01.01.2014 Bulletin 2014/01**

(51) Int Cl.:
**G06T 1/00** (2006.01)

(21) Application number: **12750047.8**

(22) Date of filing: **13.01.2012**

(86) International application number:
**PCT/JP2012/000179**

(87) International publication number:
**WO 2012/114643 (30.08.2012 Gazette 2012/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2011 JP 2011034619**

(71) Applicant: **Hitachi-Omron Terminal Solutions, Corp.**
**Tokyo 141-8576 (JP)**

(72) Inventors:
• **YAMAMOTO, Naoto**
  **Tokyo 141-8576 (JP)**
• **SUGIYAMA, Kenji**
  **Tokyo 141-8576 (JP)**
• **MIZUNO, Yasuo**
  **Tokyo 141-8576 (JP)**

(74) Representative: **MERH-IP**
  **Matias Erny Reichl Hoffmann**
  **Paul-Heyse-Strasse 29**
  **80336 München (DE)**

(54) **OUTSIDE LIGHT BLOCKING COVER USED IN FINGER VEIN AUTHENTICATION DEVICE, AND FINGER VEIN AUTHENTICATION DEVICE**

(57)    A finger vein authentication processing unit 100 includes a placing unit 10 for placing a finger F of a hand, an imaging unit 30 imaging a vein pattern of the finger F placed on the placing unit 10, a control unit 40 (an authentication processing unit) performing authentication processing by using the vein pattern imaged by the imaging unit 30 and an external-light blocking cover 50 which covers the finger F placed on the placing unit 10 to block external light incident on the imaging unit 30. The external-light blocking cover 50 has a slit 52 for visually recognizing the finger F covered by the external-light blocking cover 50 from the outside of the external-light blocking cover 50. The slit 52 limits a visible angle of the finger F to 60 degrees or less.

[FIG. 1]

EP 2 680 218 A1

**Description**

Technical Field

The present invention relates to an external-light blocking cover used for a finger vein authentication apparatus and a finger vein authentication apparatus.
The contents disclosed in Japanese Patent Application No. 2011-34619 are incorporated in this description for reference.

Background Art

In recent years, introduction of a biometric authentication apparatus as a means for authenticating individuals to an ATM (automated teller machine), a CD (cash dispenser), an entrance and exit management apparatus, a key management apparatus and so on is proceeding. The biometric authentication apparatus acquires biometric information as information peculiar to a living body and checks the information with biometric information registered in advance to perform authentication based on the degree of the check. As the biometric authentication apparatus, a finger vein authentication apparatus using a vein pattern of a finger of a hand as biometric information is known.
Incidentally, ambient light incident on an imaging unit (camera) when imaging the vein pattern of the finger adversely affects the imaging of the vein pattern and authentication accuracy in the finger vein authentication apparatus. Accordingly, the finger vein authentication apparatus is designed to suppress the effect of ambient light by blocking incoming radiation of ambient light to the imaging unit by means of: (i) covering the entire imaging surface by a finger of a hand, (ii) covering the entire imaging surface by a cover provided as part of the apparatus, (iii) providing an external-light blocking cover for blocking incoming radiation of ambient light to the imaging unit and so on.

Citation List

Patent Literature

PTL 1: JP-A-2007-185335

Summary of Invention

Technical Problem

However, in the example in which the entire imaging surface is covered by the cover as the above (ii) in the finger vein authentication apparatus, it is difficult to visually recognize the finger put on the imaging surface. Accordingly, there were problems that a user has high psychological reluctance and that it is difficult to know whether the user puts the finger on a suitable position. In a common finger vein authentication apparatus, a two-dimensional vein pattern is used. Accordingly, the vein pattern imaged by the imaging unit is changed according to a posture in a roll direction (hereinafter referred to as merely a "posture") around an axis of the finger at the time of imaging. However, as the finger put on the imaging surface is difficult to be visually recognized in the example in which the entire imaging surface is covered by the cover as the above (ii), it is difficult to adjust the posture of the finger to be a posture at the time of registering the vein pattern (or a posture to be regarded as the posture at the time of registering the vein pattern). The problem concerning the posture adjustment of the finger occurs also in the case where a slit for natural lighting is provided in the external-light blocking cover as in the invention described in PTL 1.
In the finger vein authentication apparatus, it is desired to block incoming radiation of ambient light to the imaging unit as well as to facilitate the adjustment of the finger posture on the imaging surface.

Solution to Problem

1. According to an embodiment of the invention, there is provided an external-light blocking cover used for a finger vein authentication apparatus including a placing unit for placing a finger of a hand, an imaging unit imaging a vein pattern of the finger placed on the placing unit and an authentication processing unit performing authentication processing by using the vein pattern imaged by the imaging unit, which covers the finger placed on the placing unit to block external light incident on the imaging unit.
The external-light blocking cover includes a window portion for visually recognizing the finger covered by the external-light blocking cover from the outside of the external-light blocking cover, in which the window portion is formed so that an angle made by a first tangent line passing through a first edge point at the window portion in an outer surface of the external-light blocking cover and is tangent to a profile line of the finger and a second tangent line passing through a second edge point facing the first edge point at the window portion in the outer surface of the external-light blocking cover and is tangent to the profile line of the finger is 60 degrees or less in a plane perpendicular to an axis of the finger placed on the placing unit.

When the external-light blocking cover is used for the finger vein authentication apparatus, it is possible to block incoming radiation of ambient light to the imaging unit as well as to adjust the posture of the finger on an imaging surface easily while visually recognizing the finger from the outside of the external-light blocking cover through the window portion. As a result, the reduction of authentication accuracy in the finger vein authentication apparatus can be suppressed.

In the external-light blocking cover, the angle made by the first tangent line and the second tangent line is a visible angle of the finger limited by the window portion. When the angle is limited to 60 degrees or less, a user can definitely grasp the contrast between the external-light blocking cover and the finger visually recognized from the window portion as compared with a case where the visible angle of the finger limited by the window portion is larger than 60 degrees, and thus, it is possible to adjust the posture of the finger easily.

2. In the external-light blocking cover, the window portion may be provided with a filter transmitting visible light and blocking ambient light which is light having wavelengths other than the visible light and having wavelengths adversely affecting the imaging of the vein pattern by the imaging unit.

It is possible to block ambient light incident from the window portion while securing the visibility of the finger from the window portion by the above external-light blocking cover.

3. In the external-light blocking cover, the filter may block infrared light as the ambient light.

It is possible to block infrared light having relatively large effect on the imaging of the vein pattern by the above external-light blocking cover.

4. The external-light blocking cover may further include a plurality of window portions, in which the plurality of window portions may be provided in a roll direction around the axis of the finger placed on the placing unit.

It is possible to respond to plural use examples by the above external-light blocking cover. That is, the finger can be visually recognized from a plurality of angles at the outside of the external-light blocking cover through any of window portions. As a result, it is possible to improve the convenience.

5. In the external-light blocking cover, a plurality of window portions may include a window portion for a right finger as the window portion for the right finger for visually recognizing a finger of a right hand placed on the placing unit, which is arranged at a position shifted to the left side with respect to an axis passing through the center of the finger and perpendicular to a placing surface of the placing unit, and a window portion for a left finger as the window portion for the left finger for visually recognizing a finger of a left hand placed on the placing unit, which is arranged at a position shifted to the right side with respect to the axis passing through the center of the finger and perpendicular to the placing surface of the placing unit when a direction from a root of the finger toward a fingertip is defined as a front direction.

As the external-light blocking cover is provided, it is possible to respond to a case where the finger vein authentication apparatus is arranged at a position where the finger of the right hand is easily placed as well as a case where the apparatus is arranged at a position where the finger of the left hand is easily placed, which can improve the convenience.

Note that a lid portion for closing the window portion not being used may be provided in the above external-light blocking cover. When applying such structure, incoming radiation of ambient light from the window portion not being used can be prevented.

6. According to another embodiment of the invention, there is provided a finger vein authentication apparatus. The finger vein authentication apparatus includes a placing unit for placing a finger of a hand, an imaging unit imaging a vein pattern of the finger placed on the placing unit, an authentication processing unit performing authentication processing by using the vein pattern imaged by the imaging unit and the above external-light blocking cover.

As the finger vein authentication apparatus has the above external-light blocking cover, it is possible to block incoming radiation of ambient light to the imaging unit as well as to adjust the posture of the finger on the imaging surface easily while visually recognizing the finger from the outside of the external-light blocking cover through the window portion. As a result, the reduction of authentication accuracy in the finger vein authentication apparatus can be suppressed.

The present invention can be applied to the automated teller machine (ATM), the cash dispenser (CD), the entrance and exit management apparatus, the key management apparatus and so on including the above finger vein authentication apparatus, in addition to the structures as the above external-light blocking cover and the finger vein authentication apparatus.

Brief Description of Drawings

[Fig. 1] Fig. 1 is an explanatory diagram showing a schematic structure of a finger vein authentication apparatus 100 as a first embodiment of the invention.
[Fig. 2] Fig. 2 is an explanatory diagram indicating an internal configuration of a control unit 40.
[Fig. 3] Fig. 3 is an explanatory view of the external-light blocking cover 50 and a finger F covered by the external-light blocking cover 50 seen from an upper surface of the external-light blocking cover 50.
[Fig. 4] Fig. 4 is an explanatory chart showing light transmittance characteristics of an infrared cut-off filter 54.
[Fig. 5] Fig. 5 shows explanatory views showing design of a slit 52 in the external-light blocking cover 50.
[Fig. 6] Fig. 6 is an explanatory graph showing a design example of the slit 52 in the external-light blocking cover 50.
[Fig. 7] Fig. 7 is an explanatory diagram showing a schematic structure of a finger vein authentication apparatus 100A as a second embodiment of the invention.
[Fig. 8] Fig. 8 is an explanatory view showing design of a slit 52A in an external-light blocking cover 50A.
[Fig. 9] Fig. 9 is an explanatory graph showing a design example of the slit 52A in the external-light blocking cover 50A.
[Fig. 10] Fig. 10 shows explanatory views showing an external-light blocking cover 50B as a modification example.

Description of Embodiments

Hereinafter, modes for carrying out the present invention will be explained based on embodiments.

A. First Embodiment:

A1. Finger Vein Authentication Apparatus:

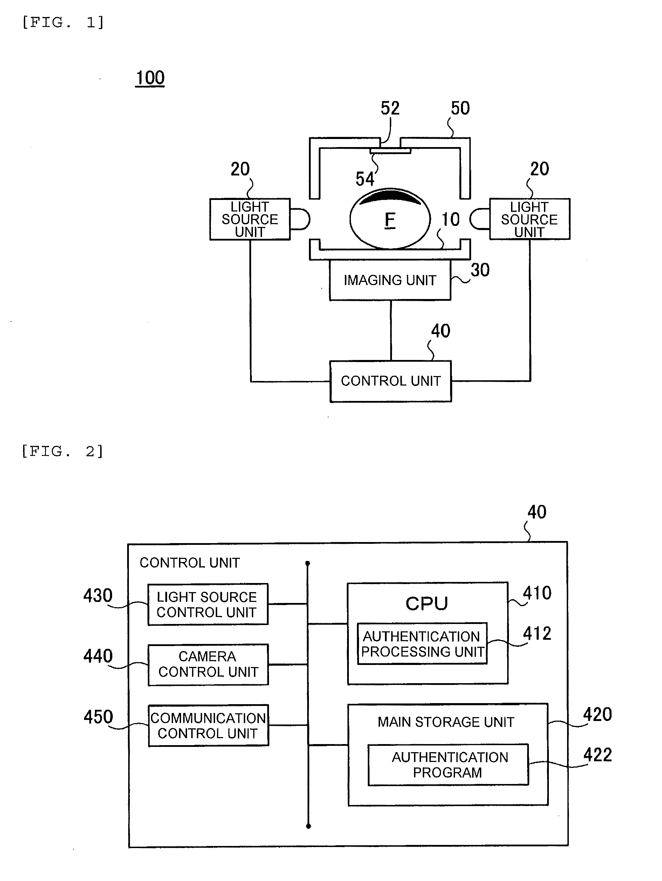

Fig. 1 is an explanatory diagram showing a schematic structure of a finger vein authentication apparatus 100 as a first embodiment of the invention. The finger vein authentication apparatus 100 is an apparatus performing biometric authentication using a vein pattern of a finger of a human hand. As shown in the drawing, the finger vein authentication apparatus 100 includes a placing unit 10 for placing a hand finger F, an external-light blocking cover 50 covering the finger F placed on the placing unit 10 to block external light incident on an imaging unit 30, a light source unit 20 irradiating the finger F placed on the placing unit 10 with light, an imaging unit 30 imaging a vein pattern of the finger F placed on the placing unit 10 and a control unit 40 performing control of the finger vein authentication apparatus 100 including authentication processing. In the present specification, "block" means "prevent" in a broad sense.

The external-light blocking cover 50 includes a slit 52 for visually recognizing the finger F covered by the external-light blocking cover 50 from the outside of the external-light blocking cover 50. The slit 52 limits a visible angle of the finger F from the outside of the external-light blocking cover 50 to 60 degrees or less. The visible angle of the finger F will be explained later. The slit 52 is provided with an infrared cut-off filter 54 transmitting visible light and blocking incoming radiation of infrared light as ambient light. In the embodiment, a cross section of a portion (upper surface) where the slit 52 is formed in the external-light blocking cover 50 is parallel to a surface of the placing unit 10 when seen from a direction of an axis of the finger F. Note that the "axis of the finger" indicates an axis of a column when the finger is regarded as the column. Additionally, a point indicating the axis of the finger in the cross section perpendicular to the axis of the finger is referred to as a "center of the finger" in the description.

As the light source unit 20, for example, a light emitting diode emitting near-infrared light can be used. As the imaging unit 30, for example, a CCD (Charge Coupled Device) camera can be used.

Fig. 2 is an explanatory diagram indicating an internal configuration of the control unit 40. As shown in the drawing, the control unit 40 includes a CPU 410, a main storage unit 420, a light source control unit 430, a camera control unit 440 and a communication control unit 450.

The CPU 410 controls the entire operation of the finger vein authentication apparatus 100 by executing given computer programs stored in the main storage unit 420. The CPU 410 also functions as an authentication processing unit 412 performing authentication processing by executing an authentication program 422 stored in the main storage unit 420. The light source control unit 430 controls the operation of the light source unit 20. The camera control unit 440 controls the operation of the imaging unit 30. The communication control unit 450 exchanges information with other apparatuses such as reception of instructions to the finger vein authentication apparatus 100, notification of a problem in the finger vein authentication apparatus 100 and so on.

A2. External-Light Blocking Cover:

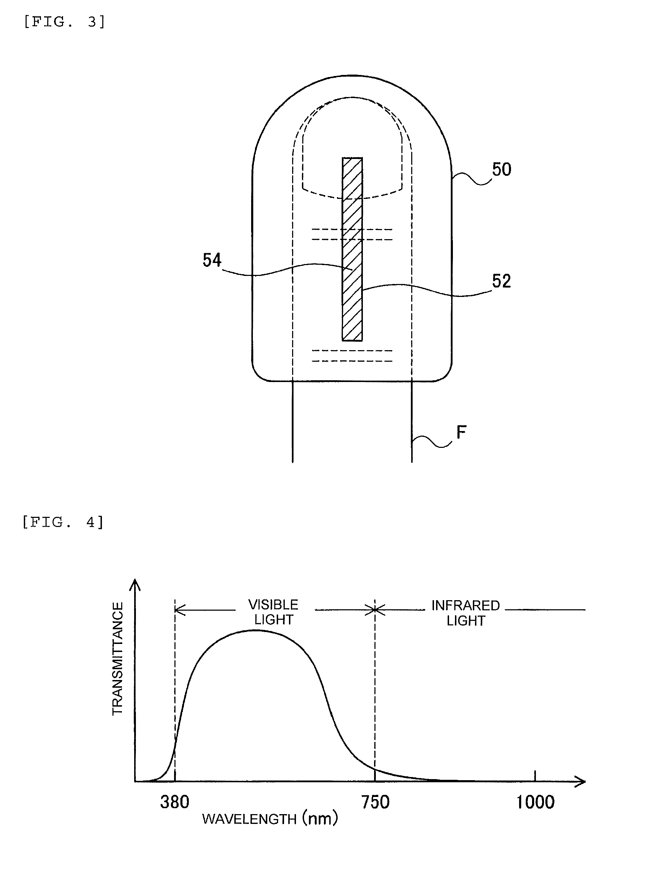

Fig. 3 is an explanatory view of the external-light blocking cover 50 and the finger F covered by the external-light blocking cover 50 seen from an upper surface of the external-light blocking cover 50. As shown in the drawing, the external-light blocking cover 50 is provided with the slit 52 having a rectangular shape, in which a length direction of the finger F corresponds to a longitudinal direction in the embodiment. Then, from the slit 52 it is possible to visually recognize a portion from a first joint almost to a second joint of the finger F. Accordingly, a user of the finger vein authentication apparatus 100 adjusts a position, an angle or a posture of the finger F with respect to the slit 52 while visually recognizing the finger F from the slit 52 in the external-light blocking cover 50.

Fig. 4 is an explanatory chart showing light transmittance characteristics of the infrared cut-off filter 54. As shown in the drawing, the infrared cut-off filter 54 cuts off infrared light having wavelengths of approximately 750 (nm) or more and ultraviolet light having wavelength of approximately 380 (nm) or less, and transmits visible light having wavelength of approximately 380 to 750 (nm).

A3. Slit:

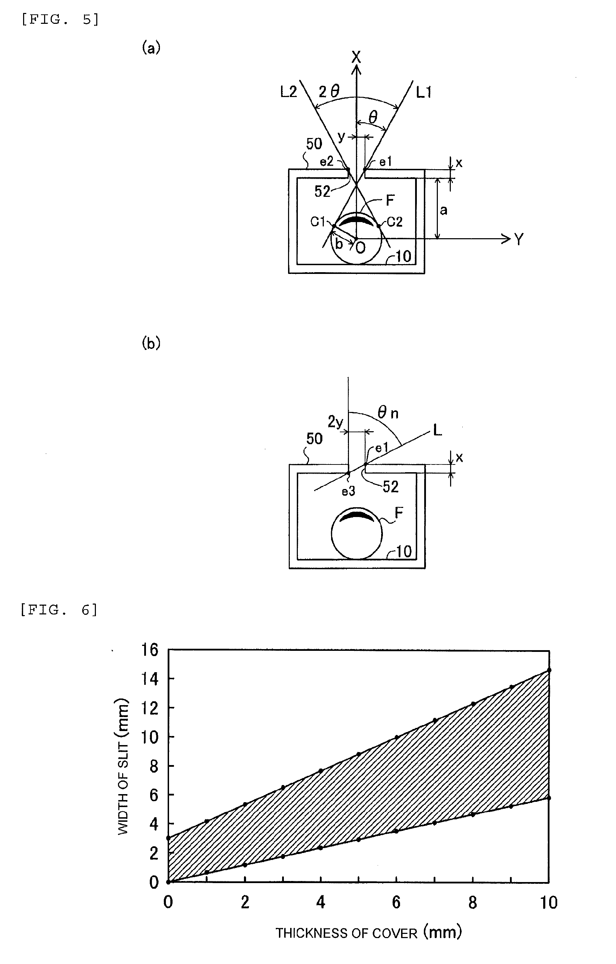

Fig. 5 shows explanatory views showing design of the slit 52 in the external-light blocking cover 50. As shown in Fig. 5(a), a cross-sectional shape (profile line) of the finger F obtained when seen from the direction of the axis of the finger F is set to be a circle with a radius "b". A direction perpendicular to the placing surface in the placing unit 10 seen from the axis direction of the finger F is set to an X-axis direction and a direction parallel to the placing surface in the placing unit 10 is set to a Y direction. The center of the shown finger F is set to an origin O (0, 0). The slit 52 is configured to be formed on the X-axis in the external-light blocking cover 50. A distance from the center of the finger F to the slit 52 at an inner surface of the external-light blocking cover 50 is set to "a". A thickness of portion where the slit 52 is formed in the external-light blocking cover 50 is set to "x". Moreover, a width of the slit 52 is set to "2y". A visible angle $2\theta$ of the finger F is an angle at which the finger F can be visually recognized from the outside of the external-light blocking cover 50 through the slit 52. The visible angle $2\theta$ of the finger F is the angle made by a tangent line L1 and a tangent line L2 which are defined as follows. The tangent line L1 is a tangent line passing through an edge point e1 (a+x, y) of the slit 52 at an outer surface of the external-light blocking cover 50 and is tangent to the profile line of the finger F in a plane perpendicular to the axis of the finger F placed on the placing unit 10. The tangent line L2 is a tangent line passing through an edge point e2 (a+x, -y) facing the edge point e1 of the slit 52 at the outer surface of the external-light blocking cover 50 and is tangent to the profile line of the finger F. "$\theta$" is an angle made by the X-axis and the tangent line L1. Additionally, a tangent point between the tangent line L1 and the circle is set to a point C1 $(X_0, y_0)$.

In this case, as the tangent line L1 passes through the edge point e1 and the point C1, the following expressions (1) and (2) hold.

[Expression 1]

$$x_0(a + x) + y_0 y = b^2 \quad \cdots \ (1)$$

$$x_0{}^2 + y_0{}^2 = b^2 \quad \cdots \ (2)$$

Then, solutions of simultaneous equations including the above expressions (1) and (2) will be expressions (3) and (4) shown below.
[Expression 2]

$$x_0 = b \frac{(a+x)b \pm y\sqrt{((a+x)^2 + y^2) - b^2}}{a^2 + b^2} \quad \cdots \; (3)$$

$$y_0 = b \frac{yb \mp (a+x)\sqrt{((a+x)^2 + y^2) - b^2}}{a^2 + b^2} \quad \cdots \; (4)$$

A gradient $\alpha$ of the tangent line L1 can be expressed by an expression (5) or an expression (6) shown below from the above solutions.
[Expression 3]

$$\alpha = -\frac{x_0}{y_0} = \frac{(a+x)b + y\sqrt{((a+x)^2 + y^2) - b^2}}{-yb + (a+x)\sqrt{((a+x)^2 + y^2) - b^2}} \quad \cdots \; (5)$$

$$\alpha = -\frac{x_0}{y_0} = -\frac{(a+x)b - y\sqrt{((a+x)^2 + y^2) - b^2}}{yb + (a+x)\sqrt{((a+x)^2 + y^2) - b^2}} \quad \cdots \; (6)$$

Here, the gradient $\alpha$ of the tangent line L1 is positive and the width of the slit 52 "2y" is sufficiently small, therefore, the above expression (5) will be the gradient of the tangent line L1.
Therefore, $\theta$ which is 1/2 of the visible angle $2\theta$ of the finger F can be represented by an expression (7) shown below.
[Expression 4]

$$\theta \geq \tan^{-1} \alpha = \tan^{-1}\left\{ \frac{(a+x)b + y\sqrt{((a+x)^2 + y^2) - b^2}}{-yb + (a+x)\sqrt{((a+x)^2 + y^2) - b^2}} \right\} \quad \cdots \; (7)$$

As the visible angle $2\theta$ of the finger F is limited to 60 degrees or less in the embodiment, the slit 52 may set respective values so that $\theta$ is 30 degrees or less in the expression (7).
It is necessary that the slit 52 is designed so that the inside of the external-light blocking cover 50 can be seen from a direction inclined in the roll direction around the axis of the finger F. Accordingly, when an angle, shown in Fig. 5(b), made by a straight line L passing through the edge point e1 of the slit 52 at the outer surface of the external-light blocking cover 50 and an edge point e3 of the slit 52 at an inner surface of the external-light blocking cover 50 and the X axis is $\theta$n, it is necessary that "x" (the thickness of the portion where the slit 52 is formed in the external-light blocking cover 50) and "y" (1/2 of the width of the slit 52) satisfy an expression (8) shown below.
[Expression 5]

$$x \tan \theta n \leq 2y (0 \langle \theta n \langle \pi / 2) \quad \cdots \; (8)$$

Fig. 6 is an explanatory graph showing a design example of the slit 52 in the external-light blocking cover 50.

In respective parameters shown in Fig. 5, $\theta$ which is 1/2 of the visible angle $2\theta$ of the finger F to be limited is set to 30 degrees, a diameter of the finger 2b is set to 17(mm) and a distance h=a+b from the surface of the placing unit 10 to the slit 52 in the external-light blocking cover 50 is set to 28 (mm). In the shown example, the diameter of the finger 2b is set based on a diameter of a hand finger of a normal adult male. In this case, an effective range of the shape of the slit 52 satisfying the expressions (7) and (8) is a hatched range in Fig. 6.

In the finger vein authentication apparatus 100 according to the first embodiment explained as the above, the slit 52 included in the external-light blocking cover 50 limits the visible angle $2\theta$ of the finger F to 60 degrees or less. Accordingly, the user of the finger vein authentication apparatus 100 can definitely grasp the contrast between the external-light blocking cover 50 and the finger F visually recognized from the slit 52 as compared with a case where the visible angle $2\theta$ of the finger F is larger than 60 degrees. Therefore, it is possible to block incoming radiation of ambient light to the imaging unit 30 as well as to adjust the posture of the finger F on the imaging surface easily while visually recognizing the finger F from the outside of the external-light blocking cover 50 through the slit 52.

Additionally, as the infrared cut-off filter 54 is provided at the slit 52 in the external-light blocking cover 50, it is possible to block infrared light which is ambient light incident from the slit 52 and which has relatively large effect on the imaging of the vein pattern.

As a result, the reduction of authentication accuracy in the finger vein authentication apparatus 100 can be suppressed.

B. Second Embodiment:

B1. Finger Vein Authentication Apparatus:

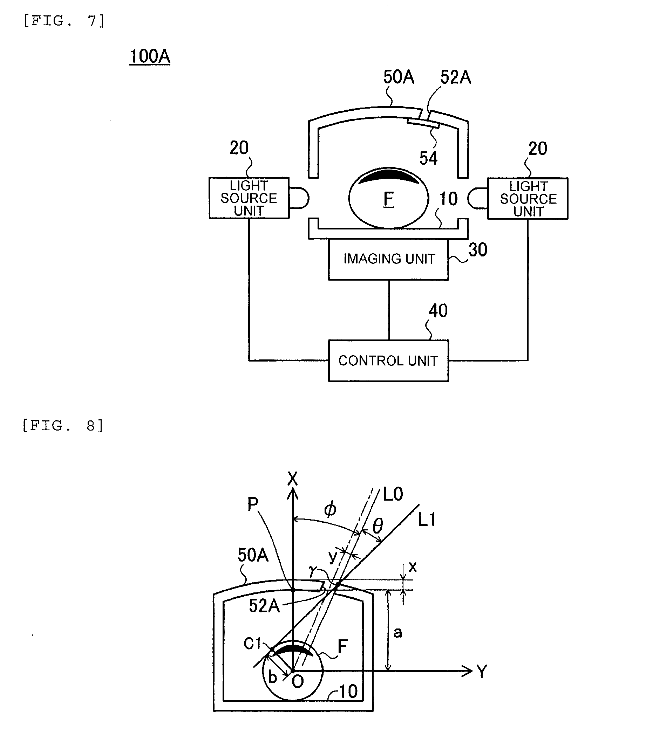

Fig. 7 is an explanatory diagram showing a schematic structure of a finger vein authentication apparatus 100A as a second embodiment of the invention. The finger vein authentication apparatus 100A includes an external-light blocking cover 50A instead of the external-light blocking cover 50 in the finger vein authentication apparatus 100 according to the first embodiment. The external-light blocking cover 50A includes a slit 52A for visually recognizing the finger F covered by the external-light blocking cover 50A from the outside of the external-light blocking cover 50A in the same manner as the external-light blocking cover 50 in the first embodiment. The external-light blocking cover 50A in the finger vein authentication apparatus 100A is different from the external-light blocking cover 50 in the finger vein authentication apparatus 100 in, for example, the shape of the upper surface and the position where the slits 52/52A are formed as can be seen from comparison between Fig. 1 and Fig. 7.

The slit 52A in the external-light blocking cover 50A has a rectangular shape and limits the visible angle of the finger F to 60 degrees or less in the same manner as the slit 52 in the external-light blocking cover 50. The slit 52A is also provided with the infrared cut-off filter 54 transmitting visible light and blocking incoming radiation of infrared light as ambient light in the same manner as the slit 52. A cross section of a portion (upper surface) where the slit 52A is formed seen from the direction of the axis of the finger F in the external-light blocking cover 50A is an arc shape, which is different from the external-light blocking cover 50 in the embodiment.

B2. Slit

Fig. 8 is an explanatory view showing design of the slit 52A in the external-light blocking cover 50A. As shown in Fig. 8, a cross-sectional shape (profile line) of the finger F obtained when seen from the direction of the axis of the finger F is set to be a circle with a radius "b". A direction perpendicular to the placing surface in the placing unit 10 seen from the axis direction of the finger F is set to an X-axis direction and a direction parallel to the placing surface in the placing unit 10 is set to a Y direction. The center of the shown finger F is set to an origin O (0, 0). Moreover, a curvature radius of an upper surface (outer surface) of the external-light blocking cover 50A is set to $R_1$. A circle with a radius $R_1$ has a center point on the X axis. Furthermore, a distance from the center of the finger F to an apex P on the inside of the external-light blocking cover 50A is set to "a". A thickness of portion where the slit 52A is formed in the external-light blocking cover 50A is set to "x". The slit 52A is provided at a position shifted from the X axis by an angle $\phi$ in the external-light blocking cover 50A. Moreover, a width of the slit 52A is set to "2y". A visible angle $2\theta$ of the finger F is an angle at which the finger F can be visually recognized from the outside of the external-light blocking cover 50A through the slit 52A. $\theta$ is an angle made by a straight line L0 passing through the center of the finger F and the center of the slit 52A and a tangent line L1. The tangent line L1 is a tangent line of a circle, which passes through an edge point $\gamma$ ($X_\gamma$, $Y_\gamma$) of the slit 52A at the outer surface of the external-light blocking cover 50A. A tangent point between the tangent line L1 and the circle is set to a point C1 ($X_0$, $Y_0$). Additionally, the difference of heights between an edge point facing the edge point $\gamma$ ($X_\gamma$, $Y_\gamma$) across the slit 52A and the edge point $\gamma$ ($X_\gamma$, $Y_\gamma$) can be ignored.

In this case, the center point of the arc with the curvature radius $R_1$ is ($-(-R_1-(a+x))$, 0), and an equation of the circle will be an expression (9) shown below. A point on the arc is represented by (X, Y).

[Expression 6]

$$(X + R_1 - (a + x))^2 + Y^2 = R_1{}^2 \quad \cdots \; (9)$$

In Fig. 8, as the straight line L0 is obtained by being rotated from the X axis by the angle $\phi$ and by being horizontally moved by a length corresponding to the half of the slit width, an expression (10) shown below is derived.

[Expression 7]

$$Y = X \tan\varphi + y \cos\varphi \quad \cdots \; (10)$$

Then, the edge point $\gamma$ ($X\gamma$, $Y_\gamma$) of the slit 52A at the outer surface of the external-light blocking cover 50A is a point of intersection between the above expression (9) and the expression (10), and solutions of simultaneous equations including the above expressions will be expressions (11) and (12) shown below.

[Expression 8]

$$X_\gamma = \cos\varphi \left\{ \frac{\cos\varphi((a+x)-R_1) - \frac{1}{2}y\sin 2\varphi}{\pm \sqrt{R_1{}^2 - \sin^2\varphi(R_1 - (a+x))^2 + \cos^2\varphi(2y\sin\varphi(R_1-(a+x)) - y^2\cos^2\varphi)}} \right\} \quad \cdots \; (11)$$

$$Y_\gamma = \sin\varphi \left\{ \frac{\cos\varphi((a+x)-R_1) - \frac{1}{2}y\sin 2\varphi}{\pm \sqrt{R_1{}^2 - \sin^2\varphi(R_1 - (a+x))^2 + \cos^2\varphi(2y\sin\varphi(R_1-(a+x)) - y^2\cos^2\varphi)}} \right\} + y\cos\varphi \quad \cdots \; (12)$$

Here, ($X\gamma$, $Y_\gamma$) $>0$, therefore, ($X\gamma$, $Y_\gamma$) will be expressions (13) and (14) shown below respectively.

[Expression 9]

$$X_\gamma = \cos\varphi \left\{ \frac{\cos\varphi((a+x)-R_1) - \frac{1}{2}y\sin 2\varphi}{+ \sqrt{R_1{}^2 - \sin^2\varphi(R_1 - (a+x))^2 + \cos^2\varphi(2y\sin\varphi(R_1-(a+x)) - y^2\cos^2\varphi)}} \right\} \quad \cdots \; (13)$$

$$Y_\gamma = \sin\varphi \left\{ \frac{\cos\varphi((a+x)-R_1) - \frac{1}{2}y\sin 2\varphi}{+ \sqrt{R_1{}^2 - \sin^2\varphi(R_1 - (a+x))^2 + \cos^2\varphi(2y\sin\varphi(R_1-(a+x)) - y^2\cos^2\varphi)}} \right\} + y\cos\varphi \quad \cdots \; (14)$$

Furthermore, the tangent line L1 is the tangent line of the circle representing the finger F, which passes through the point $\gamma$ and the point C1, therefore, expressions (15) and (16) shown below hold.

[Expression 10]

$$x_0 X_\gamma + y_0 Y_\gamma = b^2 \quad \cdots \; (15)$$

$$x_0{}^2 + y_0{}^2 = b^2 \quad \cdots \; (16)$$

Then, solutions of simultaneous equations including the above expressions (15) and (16) will be expressions (17) and (18) shown below.

[Expression 11]

$$x_0 = b\frac{X_\gamma b \pm Y_\gamma \sqrt{(X_\gamma{}^2 + Y_\gamma{}^2) - b^2}}{X_\gamma{}^2 + Y_\gamma{}^2} \quad \cdots \; (1\,7)$$

$$y_0 = b\frac{Y_\gamma b \mp X_\gamma \sqrt{(X_\gamma{}^2 + Y_\gamma{}^2) - b^2}}{X_\gamma{}^2 + Y_\gamma{}^2} \quad \cdots \; (1\,8)$$

Then, a gradient $\alpha$ of the tangent line L1 can be calculated from the solutions in the same manner as the first embodiment. The gradient $\alpha$ of the tangent line L1 can be expressed by an expression (19) shown below.

[Expression 12]

$$\alpha = -\frac{x_0}{y_0} = \frac{X_\gamma b + Y_\gamma \sqrt{(X_\gamma{}^2 + Y_\gamma{}^2) - b^2}}{-Y_\gamma b + X_\gamma \sqrt{(X_\gamma{}^2 + Y_\gamma{}^2) - b^2}} \quad \cdots \; (1\,9)$$

Then, as the gradient $\alpha$ of the tangent line L1 is equal to $\phi + \theta$, $\theta$ which is 1/2 of the visible angle $2\theta$ of the finger F can be represented by an expression (20) shown below.

[Expression 13]

$$\theta \geq \tan^{-1}\alpha - \varphi = \tan^{-1}\left\{\frac{X_\gamma b + Y_\gamma \sqrt{(X_\gamma{}^2 + Y_\gamma{}^2) - b^2}}{-Y_\gamma b + X_\gamma \sqrt{(X_\gamma{}^2 + Y_\gamma{}^2) - b^2}}\right\} - \varphi \quad \cdots \; (2\,0)$$

Also in the present embodiment, the visible angle $2\theta$ of the finger F can be limited to 60 degrees or less in the same manner as the first embodiment. For that purpose, values of respective parameters of the slit 52A are set so that $\theta$ is 30 degrees or less in the above expression (20). Furthermore, it is necessary that "x" (the thickness of a portion where the slit 52A is formed in the external-light blocking cover 50A) and "y" (1/2 of the width of the slit 52A) satisfy an expression (8) shown above in the same manner as the first embodiment.

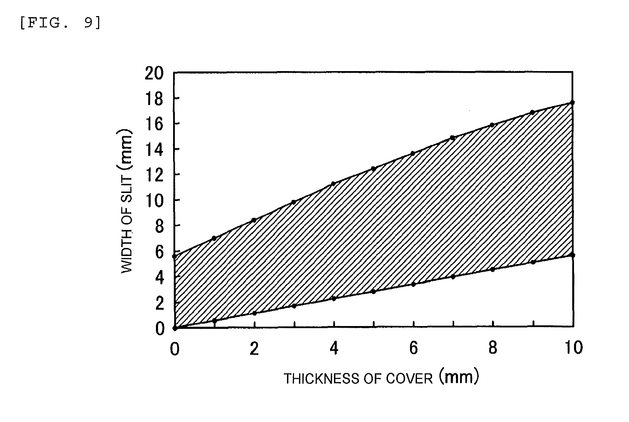

Fig. 9 is an explanatory graph showing a design example of the slit 52A in the external-light blocking cover 50A. In respective parameters shown in Fig. 8, the curvature radius $R_1$ is set to 30 (mm) and the angle $\phi$ at which the slit 52A is inclined with respect to the X axis is set to 30 degrees. Additionally, $\theta$ which is 1/2 of the visible angle $2\theta$ of the finger F is set to 30 degrees, a diameter of the finger $2b$ is set to 17 (mm), a distance $h=a+b$ from the surface of the placing unit 10 to the apex P on the inside of the external-light blocking cover 50A is set to 28 (mm). In this case, an effective range of the shape of the slit 52A satisfying the expressions (20) and (8) is a hatched range in Fig. 9.

Also in the finger vein authentication apparatus 100A according to the second embodiment explained as the above, the slit 52A included in the external-light blocking cover 50A limits the visible angle $2\theta$ of the finger F to 60 degrees or less in the same manner as the first embodiment. Accordingly, the user of the finger vein authentication apparatus 100A can definitely grasp the contrast between the external-light blocking cover 50A and the finger F visually recognized from the slit 52A as compared with a case where the visible angle $2\theta$ of the finger F is larger than 60 degrees. Therefore, it is possible to block incoming radiation of ambient light to the imaging unit 30 as well as to adjust the posture of the finger F on the imaging surface easily while visually recognizing the finger F from the outside of the external-light blocking cover 50A through the slit 52A.

C. Modification Examples:

Some embodiments of the present invention have been explained as the above, and the invention is not limited to such embodiments at all, and a variety of embodiments may be presented within a scope not departing from the gist thereof. For example, the following modifications are possible.

C1. Modification Example 1:

In the above embodiment, for example, one slit 52 is provided in the external-light blocking cover 50, however, the invention is not limited to the above example. In the external-light blocking cover 50, a plurality of slits may be provided along the roll direction around the axis of the finger F placed on the placing unit 10. According to the structure, it is possible to respond to a plurality of use examples. That is, the finger can be visually recognized from a plurality of angles at the outside of the external-light blocking cover 50 through any of the slits. As a result, it is possible to improve the convenience.

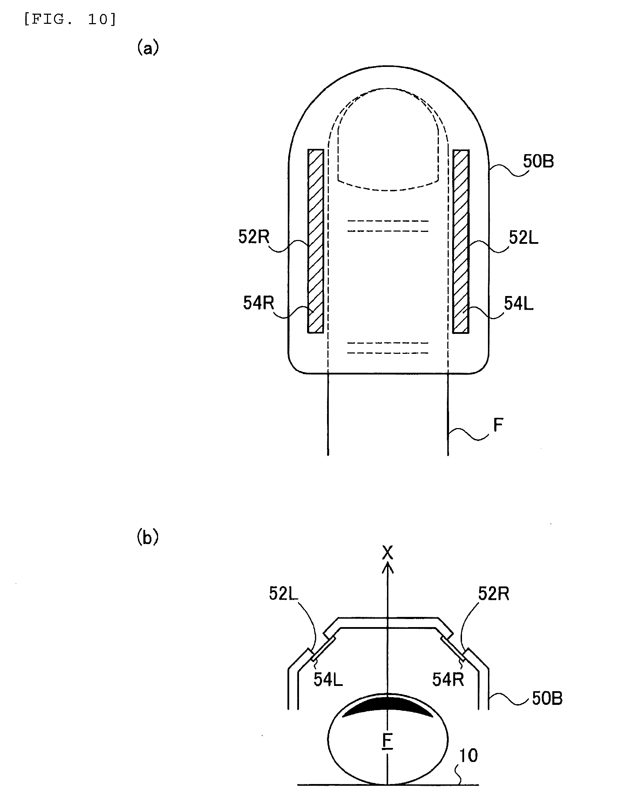

Fig. 10 shows explanatory views showing an external-light blocking cover 50B as a modification example. Fig. 10(a) shows an appearance of the external-light blocking cover 50B and the finger F covered by the external-light blocking cover 50B seen from an upper surface of the external-light blocking cover 50B. Fig. 10(b) shows a cross-sectional view of the external-light blocking cover 50B seen from the direction of the axis of the finger F. As shown in the drawings, the external-light blocking cover 50B includes a slit 52R and a slit 52L at both sides of the upper surface thereof. The slits 52R and 52L are arranged so as to be shifted to right and left respectively with respect to an axis passing through the center of the finger F and perpendicular to the placing surface of the placing unit 10 when a direction from a root of the finger F toward a fingertip is defined as a front direction. The slit 52R is a slit for a right finger for visually recognizing the finger F of a right hand placed on the placing unit 10. The slit 52L is a slit for a left finger for visually recognizing the finger F of a left hand placed on the placing unit 10. Moreover, the slits 52R and 52L are provided with infrared cut-off filters 54R and 52L respectively. As the external-light blocking cover 50B is provided, it is possible to respond to a case where the finger vein authentication apparatus is arranged at a position where the finger of the right hand is easily placed as well as a case where the apparatus is arranged at a position where the finger of the left hand is easily placed, which can improve the convenience.

C2. Modification Example 2:

In the above modification example, for example, the slit 52 is provided with the infrared cut-off filter 54, however, the infrared cut-off filter 54 can be omitted.

C3. Modification Example 3:

In the above modification example, for example, the external-light blocking cover 50 is provided with the slit 52 having the rectangular shape, however, the invention is not limited to the example. The external-light blocking cover may have a window portion which is generally for visually recognizing the finger covered by the external-light blocking cover from the outside of the external-light blocking cover and which limits the visible angle of the finger to 60 degrees or less.

The invention of the present application has been explained in detail with reference to the preferred and illustrative embodiments as the above. However, the invention of the present application is not limited to the embodiments and structures explained above. Then, the invention of the present application includes various modifications and equivalent structures. Furthermore, various components of the disclosed invention have been disclosed by various combinations and structures, however, these are illustrative, and the number of respective components may be higher or lesser than the above examples. Moreover, one component may be applied. These examples are included in the scope of the invention of the present application.

Reference Sings List

| | |
|---|---|
| 100, 100A | finger vein authentication apparatus |
| 10 | placing unit |
| 20 | light source unit |
| 30 | imaging unit |
| 40 | control unit |

| 410 | CPU |
| 412 | authentication processing unit |
| 420 | main storage unit |
| 422 | authentication program |
| 430 | light source control unit |
| 440 | camera control unit |
| 450 | communication control unit |
| 50, 50A, 50B | external-light blocking cover |
| 52, 52A, 52L, 52R | slit |
| 54, 54L, 54R | infrared cut-off filter |

**Claims**

1. An external-light blocking cover used for a finger vein authentication apparatus including a placing unit for placing a finger of a hand, an imaging unit imaging a vein pattern of the finger placed on the placing unit and an authentication processing unit performing authentication processing by using the vein pattern imaged by the imaging unit, which covers the finger placed on the placing unit to block external light incident on the imaging unit, the external-light blocking cover comprising:

   a window portion for visually recognizing the finger covered by the external-light blocking cover from the outside of the external-light blocking cover,
   wherein the window portion is formed so that an angle made by a first tangent line passing through a first edge point at the window portion in an outer surface of the external-light blocking cover and is tangent to a profile line of the finger and a second tangent line passing through a second edge point facing the first edge point at the window portion in the outer surface of the external-light blocking cover and is tangent to the profile line of the finger is 60 degrees or less in a plane perpendicular to an axis of the finger placed on the placing unit.

2. The external-light blocking cover according to claim 1,
   wherein the window portion is provided with a filter transmitting visible light and blocking ambient light which is light having wavelengths other than the visible light and having wavelengths adversely affecting the imaging of the vein pattern by the imaging unit.

3. The external-light blocking cover according to claim 2,
   wherein the filter blocks infrared light as the ambient light.

4. The external-light blocking cover according to any of claims 1 to 3, further comprising:

   a plurality of window portions,
   wherein the a plurality of window portions are provided in a roll direction around the axis of the finger placed on the placing unit.

5. The external-light blocking cover according to claim 4,
   wherein a plurality of window portions include  a window portion for a right finger as the window portion for the right finger for visually recognizing a finger of a right hand placed on the placing unit, which is arranged at a position shifted to the left side with respect to an axis passing through the center of the finger and perpendicular to a placing surface of the placing unit, and
   a window portion for a left finger as the window portion for the left finger for visually recognizing a finger of a left hand placed on the placing unit, which is arranged at a position shifted to the right side with respect to the axis passing through the center of the finger and perpendicular to the placing surface of the placing unit when a direction from a root of the finger toward a fingertip is defined as a front direction.

6. A finger vein authentication apparatus comprising:

   a placing unit for placing a finger of a hand;
   an imaging unit imaging a vein pattern of the finger placed on the placing unit;
   an authentication processing unit performing authentication processing by using the vein pattern imaged by the imaging unit; and

an external-light blocking cover described in any of claims 1 to 5.

**Amended claims under Art. 19.1 PCT**

**1.** amended) An external-light blocking cover used for a finger vein authentication apparatus including a placing unit for placing a finger of a hand, an imaging unit imaging a vein pattern of the finger placed on the placing unit and an authentication processing unit performing authentication processing by using the vein pattern imaged by the imaging unit, which covers the finger placed on the placing unit to block external light incident on the imaging unit, the external-light blocking cover comprising:

a plurality of window portions for visually recognizing the finger covered by the external-light blocking cover from the outside of the external-light blocking cover,
wherein one of the window portions is formed so that an angle made by a first tangent line passing through a first edge point at the window portion in an outer surface of the external-light blocking cover and is tangent to a profile line of the finger and a second tangent line passing through a second edge point facing the first edge point at the window portion in the outer surface of the external-light blocking cover and is tangent to the profile line of the finger is 60 degrees or less in a plane perpendicular to an axis of the finger placed on the placing unit and, wherein the plurality of window portions are provided in a roll direction around the axis of the finger placed on the placing unit.

**2.** The external-light blocking cover according to claim 1,
wherein the window portion is provided with a filter transmitting visible light and blocking ambient light which is light having wavelengths other than the visible light and having wavelengths adversely affecting the imaging of the vein pattern by the imaging unit.

**3.** The external-light blocking cover according to claim 2,
wherein the filter blocks infrared light as the ambient light.

**4.** Canceled)

**5.** amended) The external-light blocking cover according to any of claim 1 to 3,
wherein plural window portions include
a window portion for a right finger as the window portion for the right finger for visually recognizing a finger of a right hand placed on the placing unit, which is arranged at a position shifted to the left side with respect to an axis passing through the center of the finger and perpendicular to a placing surface of the placing unit, and
a window portion for a left finger as the window portion for the left finger for visually recognizing a finger of a left hand placed on the placing unit, which is arranged at a position shifted to the right side with respect to the axis passing through the center of the finger and perpendicular to the placing surface of the placing unit when a direction from a root of the finger toward a fingertip is defined as a front direction.

**6.** amended) A finger vein authentication apparatus comprising:

a placing unit for placing a finger of a hand;
an imaging unit imaging a vein pattern of the finger placed on the placing unit;
an authentication processing unit performing authentication processing by using the vein pattern imaged by the imaging unit; and
an external-light blocking cover described in any of claims 1 to 3 and 5.

**Statement under Art. 19.1 PCT**

Claim 1: Claim 1 has been amended so as to to incorporate the limitations of Claim 4. This amendment is based on the description of paragraph 0015 as originally filed.
Claim 5, 6: These Claims have been amended so as to exclude the dependencies to the canceled Claim 4.

[FIG. 1]

<u>100</u>

[FIG. 2]

[FIG. 3]

[FIG. 4]

[FIG. 5]

(a)

(b)

[FIG. 6]

THICKNESS OF COVER (mm)

[FIG. 7]

<u>100A</u>

[FIG. 8]

[FIG. 9]

[FIG. 10]

(a)

52R

54R

50B

52L

54L

F

(b)

X

52L

52R

54L

54R

50B

F

10

## INTERNATIONAL SEARCH REPORT

| International application No. |
| --- |
| PCT/JP2012/000179 |

A. CLASSIFICATION OF SUBJECT MATTER
*G06T1/00*(2006.01)i

According to International Patent Classification (IPC) or to both national classification and IPC

B. FIELDS SEARCHED

Minimum documentation searched (classification system followed by classification symbols)
G06T1/00

Documentation searched other than minimum documentation to the extent that such documents are included in the fields searched

| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2005-323892 A  (Hitachi, Ltd.),<br>24 November 2005 (24.11.2005),<br>paragraphs [0009] to [0018]; fig. 1<br>(Family: none) | 1-3,6<br>4,5 |
| Y<br>A | JP 2007-287120 A  (Hitachi-Omron Terminal<br>Solutions, Corp.),<br>01 November 2007 (01.11.2007),<br>paragraphs [0020] to [0023], [0035], [0055]<br>& KR 10-2007-0095757 A   & CN 101042732 A | 1-3,6<br>4,5 |
| Y<br>A | JP 2007-185335 A  (Hitachi Engineering Co.,<br>Ltd.),<br>26 July 2007 (26.07.2007),<br>paragraph [0024]; fig. 5, 6<br>(Family: none) | 1-3,6<br>4,5 |

☒ Further documents are listed in the continuation of Box C.　　　☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>25 January, 2012 (25.01.12) | Date of mailing of the international search report<br>07 February, 2012 (07.02.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/000179

| C (Continuation).   DOCUMENTS CONSIDERED TO BE RELEVANT | | |
|---|---|---|
| Category* | Citation of document, with indication, where appropriate, of the relevant passages | Relevant to claim No. |
| Y<br>A | JP 2009-289288 A  (Hitachi, Ltd.),<br>10 December 2009 (10.12.2009),<br>paragraph [0018]; fig. 7<br>(Family: none) | 1-3,6<br>4,5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011034619 A
- JP 2007185335 A